# EUROPEAN PATENT SPECIFICATION

(11) **EP 4 037 024 B1**
(45) Date of publication and mention of the grant of the patent: **05.11.2025**
(21) Application number: 20868827.5
(22) Date of filing: 23.09.2020
(51) Int. Cl.: H01M 10/42, H01M 4/04, H01M 4/131, H01M 4/36, H01M 4/505, H01M 4/525, H01M 4/62

(54) **CATHODE ACTIVE MATERIAL, PREPARATION METHOD THEREFOR, AND LITHIUM SECONDARY BATTERY COMPRISING SAME**
AKTIVES KATHODENMATERIAL, VERFAHREN ZUR HERSTELLUNG DAVON UND LITHIUM-SEKUNDÄRBATTERIE DAMIT
MATÉRIAU ACTIF DE CATHODE, SON PROCÉDÉ DE PRÉPARATION ET ACCUMULATEUR AU LITHIUM LE COMPRENANT

(30) Priority: 24.09.2019 KR 20190117298
(43) Date of publication of application: 03.08.2022
(73) Proprietor: POSCO, Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR); POSCO Chemical Co., Ltd, Gyeongsangbuk-do 37918 (KR)
(72) Inventor: CHOI, Kwon Young, Seoul 07987 (KR); PARK, Inchul, Incheon 21986 (KR); PARK, Jong Il, Pohang-si, Gyeongsangbuk-do 37666 (KR); PARK, Jung Woo, Incheon 21985 (KR); KIM, Young Sang, Incheon 21986 (KR); NAM, Sang Cheol, Seoul 02587 (KR)
(74) Representative: Pfenning, Meinig & Partner mbB
(86) International application number: PCT/KR2020/012848
(87) International publication number: WO 2021/060820

(56) References cited:
- CN-A- 109 336 193
- CN-A- 110 112 393
- JP-A- 2009 140 876
- JP-A- 2013 161 597
- JP-B2- 5 515 211
- KR-A- 20150 101 873
- KR-A- 20150 101 873
- KR-B1- 101 913 939

## Description

### CROSS-REFERENCE TO RELATED APPLICATION

This application claims priority of Korean Patent Application No. 10-2019-0117298 filed in the Korean Intellectual Property Office on September 24, 2019.

### BACKGROUND OF THE INVENTION

### (a) Field of the Invention

It is related that a positive electrode active material, its manufacturing method, and a lithium secondary battery including the same.

### (b) Description of the Related Art

Recently, there is an explosive increase in demand for IT mobile devices and small electric power devices (e-bikes, small EVs, etc.), and there is a demand for electric vehicles with a driving distance of 400 km or more. Accordingly, the development of secondary batteries having high-capacity and a high energy density to drive them is being actively conducted worldwide.

In order to manufacture such a high-capacity battery, it is necessary to use a high-capacity positive electrode active material.

Among the existing layered positive electrode active materials, the highest capacity material is LiNiO₂ (275mAh/g). However, structural collapse occurs easily during charging and discharging, and thermal stability due to oxidation number problem is low, making it difficult to commercially available.

In order to solve this problem, it is necessary to substitute other stable transition metals (Co, Mn, etc.) for the unstable Ni site. For this purpose, a ternary NCM system in which Co and Mn are substituted has been developed.

However, in the case of ternary NCM, thermal safety decreases as the Ni content increases.

KR 2015 0101873 describes a positive active material, a method of preparing the positive active material, a positive electrode including the positive active material, and a lithium battery including the positive active material. CN 110 112 393 describes a positive electrode material and a preparation method and application thereof. The surfaces of a core layer material A composed of secondary spherical particles and a single crystal particle core layer material B composed of the secondary spherical particles are coated with a shell layer material to form a material A and a material B respectively, and then the material A and the material B are mixed. CN 109 336 193 describes a multielement in-situ co-doped ternary material precursor as well as a preparation method and an application thereof. The chemical formula of the precursor is (NiₓCo_{y}Mn_{z})_{1-a-c}MₐN_{c}(OH)₂₊ₖ, wherein x is larger than or equal to 1/3 and smaller than or equal to 0.9, y is larger than 0 and smaller than or equal to1/3, z is larger than 0 and smaller than or equal to 0.4, the sum of x, y and z is 1, a is larger than or equal to 0.0001 and smaller than or equal to 0.01, and c is larger than or equal to 0.0001 and smaller than or equal to 0.01; radius of a doped ion M is close to that of the lithium ion, and M is selected from one or more of Mg²⁺, Zn²⁺, Zr⁴⁺, Nb⁵⁺, Ta⁴⁺, In³⁺, Sc³⁺, Y³⁺, Ce⁴⁺, Gd³⁺; radius of a doped ion N is close to that of metal ions Mn and Co in the ternary material, and N is selected from one or more of Al³⁺, Ti⁴⁺, Ge⁴⁺, W⁶⁺, V⁵⁺.

The above information disclosed in this Background section is only for enhancement of understanding of the background of the invention, and therefore it may contain information that does not form the prior art that is already known in this country to a person of ordinary skill in the art.

### SUMMARY OF THE INVENTION

According to the present invention there is provided a positive electrode active material according to claim 1. There is also provided a manufacturing method of a positive electrode active material according to claim 7. Additionally there is provided a lithium secondary battery according to claim 12. The positive electrode active material suppresses the decomposition reaction of the electrolyte solution on the surface. Accordingly, the cycle-characteristic at high temperature can also be improved.

The positive electrode active material according to an exemplary embodiment may form a coating layer including a compound including a carbon-nitrogen bond on the surface of lithium metal oxide particles. This coating layer comes into contact with the electrolyte solution. The decomposition reaction of the electrolyte solution on the positive electrode surface can be suppressed by the action of the compound containing the carbon-nitrogen bond included in the coating layer.

Due to this reduction of the electrolyte solution side reaction, the cycle-characteristic of the positive electrode active material at a high temperature can be significantly improved.

### BRIEF DESCRIPTION OF THE DRAWINGS

FIG. 1 is an FT-IR analysis result for a positive electrode active material manufactured according to exemplary embodiment 1 to 2 and Comparative Example 1.
FIG. 2A to Fig. 2C and Fig. 3A to Fig. 3C is an XPS analysis result for the positive electrode active material manufactured according to exemplary embodiment 1 and exemplary embodiments 6 to 7.
FIG. 4 shows the evaluation result of the high temperature cycle-life characteristic for the lithium secondary battery to which the positive electrode active material manufactured according to Comparative Example 1, exemplary embodiment 1 and 2 is applied.

### DETAILED DESCRIPTION OF THE EMBODIMENTS

Hereinafter, an embodiment of the present invention will be described in detail.

The positive electrode active material according to an exemplary embodiment includes lithium metal oxide and a coating layer positioned on the surface of the lithium metal oxide.

In the present exemplary embodiment, the coating layer includes a first compound in which a peak is observed in the range of 1580 cm⁻¹ to 1600 cm⁻¹ by FT-IR measurement. In addition, in the first compound, the average transmittance of the peak in the wavelength range is in the 0.990 to 0.998 range, more specifically in the 0.993 to 0.995 range. When the wavelength range where the peak of the first compound is observed by FT-IR measurement and the average value of transmittance satisfy the range, the electrolyte solution decomposition reaction on the surface of the positive electrode active material can be effectively suppressed. Accordingly, it is possible to significantly improve the high temperature cycle-life characteristic of the lithium secondary battery to which the positive electrode active material of the present exemplary embodiment is applied.

Meanwhile, the coating layer further includes a second compound whose peak is observed in the range of 1070 cm⁻¹ to 1120 cm⁻¹ when measured by FT-IR, more specifically, in the range of 1085 cm⁻¹ to 1105 cm⁻¹. In addition, the second compound has an average transmittance of the peak in the wavelength range of 0.985 to 0.993 range, more specifically 0.987 to 0.993 range. When the wavelength range where the peak of the second compound is observed during FT-IR measurement and the average value of transmittance satisfy the range, the electrolyte solution decomposition reaction on the surface of the positive electrode active material can be effectively suppressed. Accordingly, it is possible to significantly improve the high temperature cycle-life characteristic of the lithium secondary battery to which the positive electrode active material of the present exemplary embodiment is applied.

When A is the value obtained by dividing the absorbance average of the first compound by the absorbance average of the second compound, A may satisfy Equation 1 below. 0.72 > A = (absorbance average of a first compound)/ (absorbance average of a second compound) > 0.41

More specifically, the A value may be in the range 0.72 > A > 0.22 or 0.8 > A > 0.22. **If** the A value satisfies the range, the electrolyte solution decomposition reaction on the surface of the positive electrode active material can be effectively suppressed. Accordingly, it is possible to significantly improve the high temperature cycle-life characteristic of the lithium secondary battery to which the positive electrode active material of the present exemplary embodiment is applied.

The first compound may be, for example, a compound including a CN bond.

The second compound may be, for example, a compound including a SOx bond. In this case, the SOx bond may be an SO₃ or SO₄ bond.

When a coating layer containing the first and second compounds of the same type as described above is formed on the surface of lithium metal oxide, it is possible to suppress side reaction with the electrolyte solution and make a positive electrode active material with increased high temperature cycle-life characteristic.

The coating layer, in a spectrum measured by X-ray photoelectron spectroscopy (XPS), for example, a peak can be observed in at least one of 398eV to 404eV range, 166eV to 173eV range and 158eV to 166eV range. This is a result of the inclusion of a compound containing a CN bond and/or a compound containing a SOx bond in the coating layer.

The positive electrode active material may have an average grain size (crystalline size, Lc) of 111 nm to 140 nm, more specifically, 115 nm to 120 nm range. When the average grain size of the positive electrode active material satisfies the range, the capacity retention characteristic at high temperature can be improved.

On the other hand, the average particle size D50 of the positive electrode active material according to the present exemplary embodiment may be 5 µm to 20 µm, more specifically 10 µm to 20 µm range.

In addition, the specific surface area of the positive electrode active material may be in the range of 0.3 to 1.5 m²/g, more specifically, 0.5 to 1.5 m²/g or 0.96 to 1.5 m²/g.

Meanwhile, in the present exemplary embodiment, the content of nickel in the metal in the lithium metal oxide may be 80 mol% or more.

In Chemical Formula 1, the a may be 0.85 ≤ a < 1, more specifically, 0.90 ≤ a < 1.

Also, the b may be 0 < b ≤ 0.2 or O < b ≤ 0.1, and c may be 0 < c < 0.2 or O < c ≤ 0.1.

In addition, the M1 may be Zr, and the M2 may be Al. When M1 is Zr and M2 is Al, the positive electrode active material of the present exemplary embodiment may include 0.05 parts by weight to 0.6 parts by weight of Zr based on the entire lithium metal oxide. In addition, Al may be included in the range of 0.01 to 0.4 parts by weight.

As in the present exemplary embodiment, when the content of nickel in the metal in lithium metal oxide is 80% or more, that is, when a is 0.80 or more in Chemical Formula 1, a positive electrode active material having a high-power characteristic can be implemented. Since the positive electrode active material of the present exemplary embodiment having such a composition increases the energy density per volume, it is possible to improve the capacity of the battery to which it is applied, and it is also suitable for use for electric vehicles.

A manufacturing method of a positive electrode active material according to another exemplary embodiment may include preparing lithium metal oxide and forming a coating layer on a surface of the lithium metal oxide.

In this case, the coating layer includes a first compound in which a peak is observed at 1580 cm⁻¹ to 1600 cm⁻¹ by FT-IR measurement, and the average transmittance of the peak is in the 0.990 to 0.998 range.

In addition, the coating layer includes a second compound in which a peak is observed in the range of 1070 cm⁻¹ to 1120 cm⁻¹ by FT-IR measurement, and the average transmittance of the peak is in the range of 0.985 to 0.993.

In the present exemplary embodiment, the characteristics regarding the coating layer are the same as the positive electrode active material according to the above-described an exemplary embodiment. Therefore, since this has been described in detail in the positive electrode active material according to an exemplary embodiment, it will be omitted here.

The step of preparing the lithium metal oxide may be performed by a conventional method. For example, as described in the following exemplary embodiment, lithium metal oxide can be obtained by preparing a precursor of lithium metal oxide, mixing it with a doping raw material, and sintering, cooling, and pulverization.

Next, a step of forming a coating layer on the surface of the lithium metal oxide may be performed. In this case, the step of forming the coating layer may include washing the lithium metal oxide with water. More specifically, the washing with water may be performed using a washing solution including water and an additive for forming the coating layer.

The additive may be, for example, at least one of ammonium sulfate, ammonium cobalt sulfate hexahydrate, ammonium nickel sulfate, ammonium manganese sulfate and aluminum ammonium sulfate.

The additive in the washing solution chemically reacts with Li₂CO₃ dissolved from lithium metal oxide during cleaning, and a coating layer including CN bond and SO bond can be formed on the surface of lithium metal oxide through heat treatment. Therefore, the battery employing a positive electrode active material manufactured by the same method as the present exemplary embodiment, a coating layer containing a compound having a CN bond and/or a compound having a SOx bond is formed, can have a significantly improved high temperature cycle-life characteristic.

The content of the additive may be in the range of 1 wt% to 7 wt%, more specifically 1 wt% to 5 wt%, based on the washing solution. When the content of the additive is 1 wt% or more, the high temperature cycle-life characteristic can be significantly improved. In addition, if the content of the additive in the washing solution is 7 wt% or less, the performance for a lithium secondary battery to which the positive electrode active material of the present exemplary embodiment is applied can be further improved by significantly reducing the initial resistance at room temperature.

In addition, in the water washing process, the lithium metal oxide:washing solution as a content ratio and weight ratio may be used in a 1:1 to 3:1 range.

In the present exemplary embodiment, after the step of washing the lithium metal oxide with water, the method may further include a step of heat treatment after drying the washed lithium metal oxide.

Drying of the washed lithium metal oxide can be performed for 1 hour to 30 hours at a temperature range of 80°C to 200°C. This is a sufficient temperature and time range to remove moisture, etc. remaining on the surface of the positive electrode active material treated with the washing solution, but is not limited thereto.

Next, the heat treatment of the washed lithium metal oxide may be performed, for example, in a temperature range of 300 to 700 °C, more specifically, 400 to 600 °C, for 3 to 10 hours. In addition, it may be carried out in an atmosphere of air, oxygen (O₂) or nitrogen (N₂). In the present exemplary embodiment, when the heat treatment temperature satisfies the range, there is an advantage that the high temperature cycle-life characteristic can be significantly improved.

These process conditions will be described in more detail in an exemplary embodiment to be described later.

The description related to the positive electrode active material (for the lithium secondary battery) will be omitted because it is the same as the one embodiment of the present invention described above.

The positive electrode active material layer may include a binder and a conductive material.

The binder well adheres the positive electrode active material particles to each other, and also serves to adhere the positive electrode active material well to the current collector.

The conductive material is used to impart conductivity to the electrode, and any electronic conductive material can be used without causing chemical change in the battery to be configured.

The negative electrode includes a current collector and a negative active material layer formed on the current collector, and the negative active material layer includes a negative active material.

The negative active material includes a material capable of reversible intercalation/deintercalation of lithium ion, lithium metal, an alloy of lithium metal, a material capable of doping and dedoping lithium, or a transition metal oxide.

A carbon material is a material that can intercalate/deintercalate the lithium ion in a reversible way. Any generally-used carbon-based negative active material in lithium ion secondary batteries can be used. Representative examples thereof include crystalline carbon, amorphous carbon, or a combination thereof.

The lithium metal alloy may be used as alloy of a lithium and a metal selected from the group consisting of Na, K, Rb, Cs, Fr, Be, Mg, Ca, Sr, Si, Sb, Pb, In, Zn, Ba, Ra, Ge, Al and Sn.

Materials capable of doping and dedoping the lithium include Si, SiOx (0 < x < 2), Si-Y alloy (the Y is an element selected from the group consisting of alkali metal, alkaline earth metal, group 13 element, group 14 element, transition metal, rare earth and combination thereof, and not Si), Sn, SnO₂, Sn-Y (the Y is an element selected from the group consisting of alkali metal, alkaline earth metal, group 13 element, group 14 element, transition metal, rare earth and combination thereof, and not Sn), etc..

Examples of the transition metal oxide include vanadium oxide and lithium vanadium oxide. The negative active material layer also includes a binder, and may optionally further include a conductive material.

The binder well adheres the negative active material particles to each other, and also serves to attach the negative active material to the current collector.

The conductive material is used to impart conductivity to the electrode, and any electronic conductive material can be used without causing chemical change in the battery to be configured.

As the current collector, one selected from the group consisting of copper foil, nickel foil, stainless steel foil, titanium foil, nickel foam, copper foam, a polymer substrate coated with conductive metal, and combination thereof may be used.

The negative electrode and the positive electrode are prepared by mixing an active material, a conductive material and a binder in a solvent to prepare an active material composition, and applying this composition to a current collector. Since such an electrode manufacturing method is widely known in the art, a detailed description will be omitted in this specification. As the solvent, N-methylpyrrolidone, etc. can be used, but is not limited thereto.

The electrolyte includes a non-aqueous organic solvent and lithium salt.

The non-aqueous organic solvent serves as a medium for ions involved in the electrochemical reaction of the battery to move.

The lithium salt is dissolved in an organic solvent and acts as a supply source of lithium ion in the battery, enabling basic lithium secondary battery operation, and accelerating the movement of lithium ions between the positive electrode and the negative electrode.

Depending on the type of lithium secondary battery, a separator may exist between the positive electrode and the negative electrode. As such a separator, polyethylene, polypropylene, polyvinylidene fluoride, or a multilayer of two or more layers thereof may be used. A mixed multilayer such as a polyethylene/polypropylene two-layer separator, a polyethylene/polypropylene/polyethylene three-layer separator, and a polypropylene/polyethylene/polypropylene three-layer separator may be used.

A lithium secondary battery can be classified into a lithium ion battery, a lithium ion polymer battery and a lithium polymer battery according to the type of separator and electrolyte used, and can be classified into cylindrical, prismatic, coin-type, pouch-type, etc. depending on the shape. According to the size, it can be divided into bulk type and thin film type. Since the structure and manufacturing method of these batteries are well known in this field, detailed descriptions are omitted.

### (Exemplary embodiment 1) Preparation of Ni 88mol% positive electrode active material

### 1) Preparation of positive electrode active material precursor

NiSO₄·6H₂O was used as a raw material for nickel, CoSO₄·7H₂O was used as a raw material for cobalt, and MnSO₄·H₂O was used as a raw material for manganese. These raw materials were dissolved in distilled water to prepare a 2.5M aqueous metal salt solution.

After preparing the co-precipitation reactor, N₂ was purged to prevent oxidation of metal ions during the co-precipitation reaction, and the temperature of the reactor was maintained at 50 °C.

In the co-precipitation reactor, an aqueous metal salt solution and NH₄(OH) as a chelating agent were added. In addition, NaOH was used to adjust the pH. The precipitate obtained according to the co-precipitation process was filtered, washed with distilled water, and dried in an oven at 100 °C for 24 hours to prepare a positive electrode active material precursor.

The composition of the prepared precursor was

(Ni_{0.88}CO_{0.095}Mn_{0.025})(OH)₂, and the average particle diameter D50 was 14.8 µm.

### 2) Preparation of positive electrode active material

Based on 1 mole of the positive electrode active material precursor prepared in the step 1),

A mixture was prepared by uniformly mixing LiOH·H₂O (Samjeon Chemical, battery grade) 1.05 mol, Zr 3,400 ppm from ZrO₂ (Aldrich, 4N), and Al 280ppm from Al(OH)₃ (Aldrich, 4N).

The mixture was charged into a tube furnace and calcined while oxygen was inflowed, cooled to room temperature, and then pulverized to prepare calcined powder.

Next, for the water washing process, 1 g of ammonium sulfate was added to 100 g of distilled water (D.I. water) and stirred for 1 minute to prepare a water washing solution.

100 g of the calcined powder was added to the washing solution, stirred for 10 minutes, and then filtered. After washing with water, the filtered sintered powder was dried in a chamber of 100 °C or higher, and heat treated at oxygen atmosphere and 400 °C for 3 hours to finally obtain a positive electrode active material.

### (Exemplary embodiments 2 to 7 and Comparative Example 1 and Reference Examples 1 to 2)

A positive electrode active material was manufactured in the same manner as in Example 1, except that the composition of the washing solution and the heat treatment condition of the filtered sintered powder after washing with water were adjusted as described in Table 1 below.

**(Table 1)**

| Division | A composition of washing liquid | heat treatment condition | |
|---|---|---|---|
| | | heat treatment temperature (°C) | Time (hr) |
| exemplary embodiment 1 | 1 g of ammonium sulfate 100 g of distilled water | 400 | 3 |
| exemplary embodiment 2 | 5 g of ammonium sulfate 100 g of distilled water | 400 | 3 |
| exemplary embodiment 3 | 7 g of ammonium sulfate 100 g of distilled water | 400 | 3 |
| exemplary embodiment 4 | 10 g of ammonium sulfate 100 g of distilled water | 400 | 3 |
| exemplary embodiment 6 | 1 g of ammonium sulfate 100 g of distilled water | 500 | 3 |
| exemplary embodiment 7 | 1 g of ammonium sulfate 100 g of distilled water | 600 | 3 |
| Comparative Example 1 | 100 g distilled water | 400 | 3 |
| Reference Example 1 | 1 g of ammonium sulfate 100 g of distilled water | 300 | 3 |
| Reference Example 2 | 1 g of ammonium sulfate 100 g of distilled water | 700 | 3 |
| exemplary embodiment 5 | 1 g of ammonium manganese sulfate 100 g of distilled water | 400 | 3 |

### (Experimental Example 1) FT-IR (Fourier-transform infrared spectroscopy) analysis

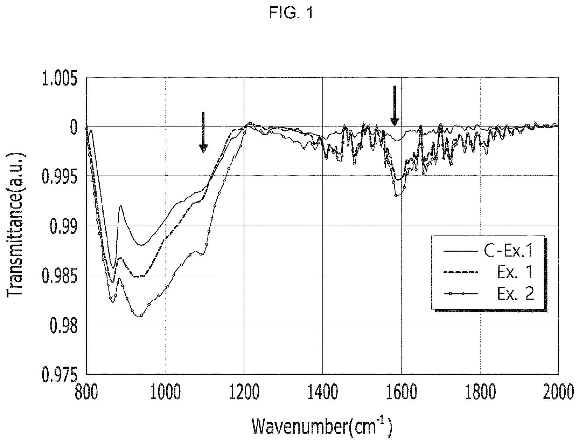

For the positive electrode active material manufactured according to exemplary embodiment 1 to 2 and Comparative Example 1, FT-IR (Fourier-transform infrared spectroscopy) is analyzed and the result is shown in FIG. 1.

Referring to the results of exemplary embodiment 1 and 2 in FIG. 1, it can be seen that the transmittance decreases as the ammonium sulfate content increases in the 1580 cm⁻¹ to 1600 cm⁻¹ wavelength region representing the N-H bend. In addition, the transmittance decreased as the content of ammonium sulfate increased in the wavelength region of the 1070 cm⁻¹ to 1120 cm⁻¹ range representing the S=O symmetric stretch. As such, when the transmittance measured in the coating layer of the positive electrode active material decreases due to an increase in the content of ammonium sulfate, the high temperature cycle-life characteristic of the lithium secondary battery can be remarkably improved.

On the other hand, in the case of the positive electrode active material prepared according to Comparative Example 1, where the coating layer was not formed by performing the washing process only with distilled water as in Comparative Example 1, a peak was observed in the wavelength region of 1580 cm⁻¹ to 1600 cm⁻¹, but almost no peak is observed in the wavelength region of 1070 cm⁻¹ to 1120 cm⁻¹.

### (Experimental Example 2) X-ray Photoelectron Spectroscopy (XPS) analysis

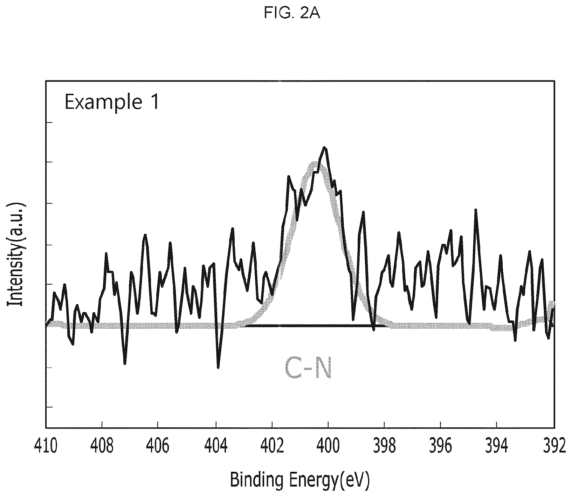

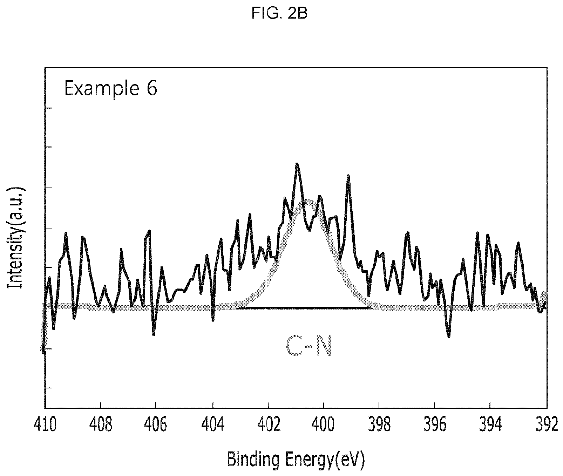

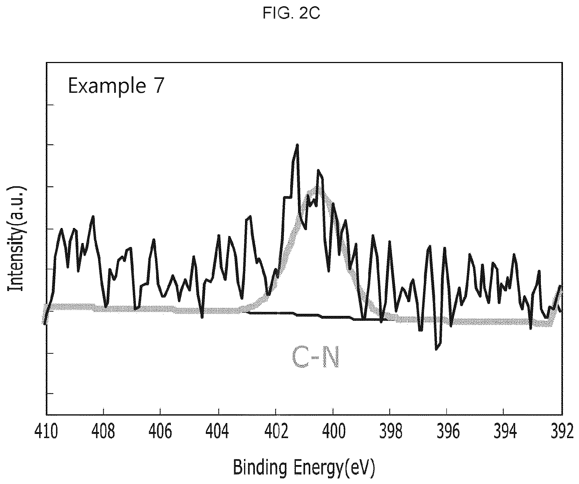

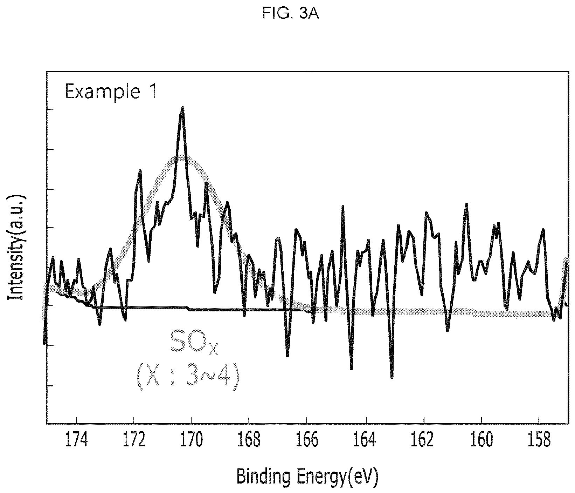

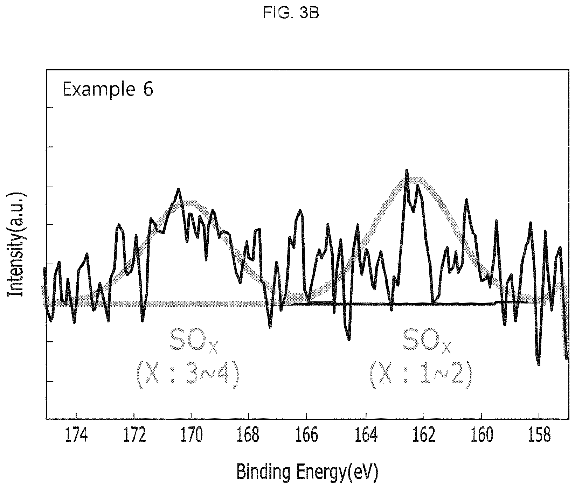

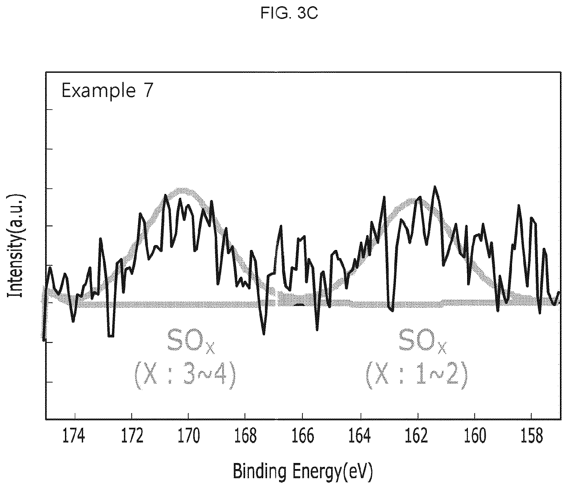

Analyzed by XPS (X-ray Photoelectron Spectroscopy) for the positive electrode active material manufactured according to exemplary embodiment 1 and exemplary embodiment 6 to 7, and the result is shown in FIG. 2A to Fig. 2C and Fig. 3A to Fig. 3C.

Referring to FIG. 2A to Fig. 2C, the N1s peak with a binding energy (Binding Energy) of 400.5 eV was observed as a C-N bond state. Also, referring to FIG. 3A to Fig. 3C, the S2p peak around 170.2 eV was observed in the SOx (x:3-4) binding state. Accordingly, it can be confirmed that the positive electrode active material according to the present exemplary embodiments includes a compound including a CN bond and a compound including a SOx bond in the coating layer.

### (Experimental Example 3) Average particle size measurement of positive electrode active material

The average particle size (D50, µm) of the positive electrode active material prepared according to Comparative Example 1 and exemplary embodiment 1 to 7 and Reference Examples 1 to 2 was measured using a particle size analyzer. The results are shown in Table 2 below.

### (Experimental Example 4) Measurement of specific surface area of positive electrode active material

For the positive electrode active material prepared according to Comparative Example 1 and exemplary embodiment 1 to 4 and Reference Examples 1 to 2, a specific surface area was measured using a BET measuring instrument (QuantaChrome, Autosorb-iQ/MP). The results are shown in Table 2 below.

### (Experimental Example 5) X-ray diffraction (XRD) analysis

For the positive electrode active material prepared according to Comparative Example 1, exemplary embodiment 1 to 7 and Reference Examples 1 to 2, the crystal grain size (crystalline size) was measured by X-ray diffraction measurement using CuKα rays, and the result was is shown in Table 2 below.

Referring to Table 2 below, in the case of the positive electrode active material according to exemplary embodiments 1 to 4, it can be confirmed that the average grain size satisfies the range of 111 nm to 140 nm.

### (Experimental Example 6) Electrochemical characteristic evaluation

After manufacturing a 2032 coin-type half cell using the positive electrode active material prepared according to Comparative Example 1, exemplary embodiment 1 to 7 and Reference Examples 1 to 2, electrochemical evaluation was performed.

### (1) Coin-type half-cell manufacturing

Specifically, positive electrode active material, polyvinylidene fluoride binder (trade name: KF1100) and Denka black conductive material were mixed at a weight ratio of 92.5:3.5:4. This mixture was added to N-methyl-2-pyrrolidone solvent so that the solid content was about 30 wt% to prepare a positive electrode active material slurry.

The slurry was coated on aluminum foil (Al foil, thickness: 15 µm), which is a positive electrode current collector, using a doctor blade (Doctor blade), dried and rolled to prepare a positive electrode. The loading amount of the positive electrode was about 14.6 mg/cm², and the rolling density was about 3.1g/cm³.

A 2032 coin-type half-cell was prepared by a conventional method using the positive electrode, lithium metal negative electrode (thickness 200 µm, Honzo metal), electrolyte solution and polypropylene separator. The electrolyte solution is prepared by dissolving 1M LiPF₆ in a mixed solvent of ethylene carbonate, dimethyl carbonate and ethylmethyl carbonate (EMC) (mixing ratio EC:DMC:EMC=3:4:3 volume%), and then a vinyl carbonate (VC) was added1.5 wt% to the solution.

### (2) 45°C high temperature cycle characteristic evaluation

The coin-type half-cell prepared in the (1) was aged at room temperature (25°C for 10 hours), and then a charge and discharge test was performed.

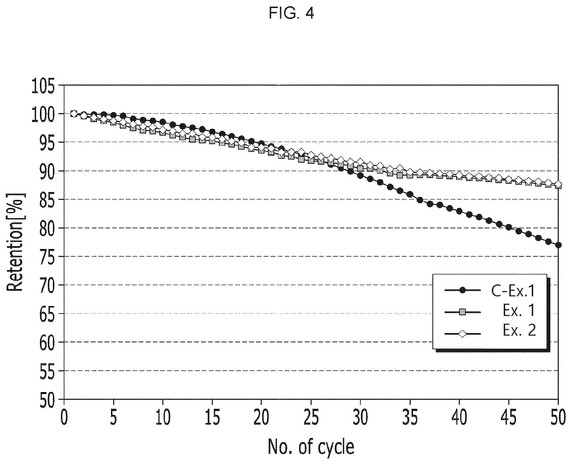

For capacity evaluation, 215mAh/g was used as a standard capacity, and CC/CV 2.5-4.25V, 1/20C cut-off was applied for charge and discharge conditions. Initial capacity was performed under 0.2C charge/0.2Cdischarge condition. The high-temperature cycle characteristic shows the 50th capacity retention rate compared to the first capacity after 50 measurements at 0.5C charge/0.5Cdischarge condition at high temperature 45°C. The results are in Fig. 4 and Table 2 below.

Referring to Table 2 and Fig. 4, in the case of exemplary embodiments 1 and 2 in which a coating layer including C-N and SOx (x:3-4) bonding exists on the positive electrode active material surface, compared with Comparative Example 1 in which such a coating layer is not formed that, it can be seen that the high temperature cycle characteristic increases significantly.

### (3) 25°C room temperature initial DC resistance characteristic evaluation

The coin-type half-cell prepared in the (1) was aged at room temperature (25°C for 10 hours), and then a charge and discharge test was performed.

For capacity evaluation, 215mAh/g was used as a standard capacity, and CC/CV 2.5-4.25V, 1/20C cut-off was applied for charge and discharge conditions. Initial capacity was performed under 0.2C charge/0.2C discharge condition. The initial DC resistance of room temperature was calculated by measuring the voltage fluctuation for 60 seconds after applying 0.2C discharge current at 100% of 4.25V charge by 0.2C, and it is shown in Table 2.

Referring to Table 2, compared to Comparative Example 1 in which no additive was used in the water washing process, in the case of Examples 1 to 7 and Reference Examples 1 and 2, in which the positive electrode active material was manufactured using an additive in the water washing process, it can be seen that the initial resistance all significantly decreased at room temperature. In particular, the initial resistance value for the positive electrode active material of exemplary embodiment 1 to 7 that the heat treatment temperature satisfies 400 to 600 degrees can be seen that it is more excellent when compared to the positive electrode active material of Reference Examples 1 and 2 manufactured under heat treatment conditions out of the range.

**(Table 2)**

| Division | A | particle size [D50, um] | specific surface area [m²/g] | grain size [nm] | room temperature initial DC resistance [Ω] | After high temperature 45°C cycle, Capacity retention rate [%] |
|---|---|---|---|---|---|---|
| Compar ative Example 1 | 0.216 | 15.0 | 0.95 | 110 | 36.1 | 76.9 |
| exempla ry embodi ment 1 | 0.717 | 15.1 | 1.01 | 118 | 34.1 | 87.4 |
| exempla ry embodi ment 2 | 0.544 | 15.1 | 0.99 | 116 | 34.3 | 87.7 |
| exempla ry embodi ment 3 | 0.450 | 15.0 | 0.98 | 117 | 34.7 | 85.8 |
| exempla ry embodi ment 4 | 0.412 | 15.1 | 0.99 | 116 | 35.5 | 85.1 |
| exempla ry embodi ment 5 | - | 15.2 | 1.01 | 117 | 34.2 | 87.1 |
| exempla ry embodi ment 6 | - | 15.0 | 1.01 | 117 | 34.3 | 86.9 |
| exempla ry embodi ment 7 | - | 15.1 | 1.00 | 116 | 34.3 | 86.3 |
| Referen ce Example 1 | - | 15.1 | 1.01 | 117 | 33.9 | 86.5 |
| Referen ce Example 2 | - | 15.0 | 0.96 | 118 | 33.7 | 85.8 |

## Claims

1. A positive electrode active material comprising: a lithium metal oxide; and a coating layer positioned on a surface of the lithium metal oxide; wherein, the coating layer includes a first compound whose average transmittance of a peak, which is observed in the range of 1580 cm⁻¹ to 1600 cm⁻¹ by FT-IR measurement, is in the range of 0.990 to 0.998,
wherein the coating layer further includes a second compound whose average transmittance of a peak, which is observed in the range of 1070 cm⁻¹ to 1120 cm⁻¹ by FT-IR measurement, is in the range of 0.985 to 0.993
wherein the lithium metal oxide is represented by Chemical Formula 1 below:
[Chemical Formula 1] LixNiaCobMncM1dM2eO2
In the Chemical Formula 1, M1 and M2 are at least one of Zr, Ti, Mg, Al, Ni, Mn, Zn, Fe, Cr, Mo and W, respectively,
x is 0.90 ≤ x ≤ 1.07, a is 0.80 ≤ a < 1, b is 0 < b ≤ 0.3, c is 0 < c ≤ 0.3, d is 0 < d < 0.01, e is 0 < e < 0.01, and a + b + c + d + e = 1.

2. The positive electrode active material of claim 1, wherein: when A is a value obtained by dividing the absorbance average of the first compound by a absorbance average of the second compound, A satisfies Equation 1 below. 0.72 > A = (an absorbance average of the first compound)/ (an absorbance average of the second compound) > 0.41 (In the equation 1, the absorbance of the first compound is "1 - the transmittance value of the first compound", and the absorbance of the second compound is "1 - the transmittance value of the second compound".)

3. The positive electrode active material of claim 1, wherein:
the first compound contains a CN bond.

4. The positive electrode active material of claim 1, wherein:
the second compound contains SOx bonds.

5. The positive electrode active material of claim 1, wherein:
in the coating layer, a peak was observed in at least one of 398eV to 404eV range, 166eV to 173eV range and 158eV to 166eV range, in the spectrum measured by X-ray photoelectron spectroscopy (XPS).

6. The positive electrode active material of claim 1, wherein:
a content of nickel in the lithium metal oxide is 80 mol% or more.

7. A manufacturing method of a positive electrode active material, comprising: preparing a lithium metal oxide; and forming a coating layer on a surface of the lithium metal oxide; wherein, the coating layer includes a first compound whose average transmittance of a peak, which is observed in the range of 1580 cm⁻¹ to 1600 cm⁻¹ by FT-IR measurement, is in the range of 0.990 to 0.998 , wherin the coating layer further includes a second compound whose average transmittance of a peak, which is observed in the range of 1070 cm⁻¹ to 1120 cm⁻¹ by FT-IR measurement, is in the range of 0.985 to 0.993,
wherein the lithium metal oxide is represented by Chemical Formula 1 below:
[Chemical Formula 1] LixNiaCobMncM1dM2eO2
In the Chemical Formula 1, M1 and M2 are at least one of Zr, Ti, Mg, Al, Ni, Mn, Zn, Fe, Cr, Mo and W, respectively,
x is 0.90 ≤ x ≤ 1.07, a is 0.80 ≤ a < 1, b is 0 < b ≤ 0.3, c is 0 < c ≤ 0.3, d is 0 < d < 0.01, e is 0 < e < 0.01, and a + b + c + d + e = 1.

8. The method of claim 7, wherein: the step of forming the coating layer comprises washing the lithium metal oxide with water; the step of washing the lithium metal oxide with water, is performed using a washing solution containing water and additives to form the coating layer.

9. The method of claim 8, wherein:
the additive is at least one of ammonium sulfate, ammonium cobalt sulfate hexahydrate,
ammonium nickel sulfate, ammonium manganese sulfate, and aluminum ammonium sulfate.

10. The method of claim 8, wherein:
a content of the additive ranges from 1 wt% to 7wt% based on the washing solution.

11. The method of claim 8, wherein: after the washing step, further comprising a step of heat treatment after drying the washed lithium metal oxide, the heat treatment step is carried out in the 400°C to 600°C temperature range for 3 to 10 hours.

12. A lithium secondary battery comprising: a positive electrode comprising the positive electrode active material according to any one of claim 1 to claim 6; a negative electrode comprising a negative active material; and an electrolyte positioned between the positive and negative electrodes.

## Patentansprüche

1. Aktivmaterial für positive Elektroden, umfassend: ein Lithium-Metalloxid; und eine Deckschicht, die auf einer Oberfläche des Lithium-Metalloxids positioniert ist; wobei die Deckschicht eine erste Verbindung enthält, deren durchschnittlicher Transmissionsgrad eines Peaks, der bei einer FT-IR-Messung im Bereich von 1580 cm⁻¹ bis 1600 cm⁻¹ vorliegt, im Bereich von 0,990 bis 0,998 liegt,
wobei die Deckschicht ferner eine zweite Verbindung beinhaltet, deren durchschnittlicher Transmissionsgrad eines Peaks, der bei einer FT-IR-Messung im Bereich von 1070 cm⁻¹ bis 1120 cm⁻¹ vorliegt, im Bereich von 0,985 bis 0,993 liegt,
wobei das Lithium-Metalloxid durch die folgende chemische Formel 1 dargestellt ist:
[Chemische Formel 1] LixNiaCobMncM1dM2eO2
wobei in der chemischen Formel 1 M1 und M2 jeweils mindestens eines von Zr, Ti, Mg, Al, Ni, Mn, Zn, Fe, Cr, Mo und W sind,
x 0,90 ≤ x ≤ 1,07 ist, a 0,80 ≤ a < 1 ist, b 0 < b ≤ 0,3 ist, c 0 < c ≤ 0,3 ist, d 0 < d < 0,01 ist, e 0< e < 0,01 ist, und a + b + c + d + e = 1.

2. Aktivmaterial für positive Elektroden nach Anspruch 1, wobei: wenn A ein Wert ist, der durch Teilen des Absorptionsdurchschnitts der ersten Verbindung durch einen Absorptionsdurchschnitt der zweiten Verbindung erhalten wird, A die folgende Gleichung 1 erfüllt. 0,72 > A = (ein Absorptionsdurchschnitt der ersten Verbindung) / (ein Absorptionsdurchschnitt der zweiten Verbindung) > 0,41 (in Gleichung 1 beträgt die Absorption der ersten Verbindung "1 - den Transmissionsgradwert der ersten Verbindung" und beträgt die Absorption der zweiten Verbindung "1 - den Transmissionsgradwert der zweiten Verbindung".)

3. Aktivmaterial für positive Elektroden nach Anspruch 1, wobei:
die erste Verbindung eine CN-Bindung enthält.

4. Aktivmaterial für positive Elektroden nach Anspruch 1, wobei:
die zweite Verbindung SOx-Bindungen enthält.

5. Aktivmaterial für positive Elektroden nach Anspruch 1, wobei:
in der Deckschicht ein Peak in mindestens einem von dem Bereich 398 eV bis 404 eV, 166 eV bis 173 eV und 158 eV bis 166 eV in dem durch Röntgen-Photoelektronenspektroskopie (XPS) gemessenen Spektrum beobachtet wurde.

6. Aktivmaterial für positive Elektroden nach Anspruch 1, wobei: ein Gehalt an Nickel in dem Lithium-Metalloxid 80 Mol-% oder mehr beträgt.

7. Fertigungsverfahren eines Aktivmaterials für positive Elektroden, umfassend: Herstellen eines Lithium-Metalloxids; und Bilden einer Deckschicht auf einer Oberfläche des Lithium-Metalloxids; wobei die Deckschicht eine erste Verbindung beinhaltet, deren durchschnittlicher Transmissionsgrad eines Peaks, der bei einer FT-IR-Messung im Bereich von 1580 cm⁻¹ bis 1600 cm⁻¹ vorliegt, im Bereich von 0,990 bis 0,998 liegt, wobei die Deckschicht ferner eine zweite Verbindung beinhaltet, deren durchschnittlicher Transmissionsgrad eines Peaks, der bei einer FT-IR-Messung im Bereich von 1070 cm⁻¹ bis 1120 cm⁻¹ vorliegt, im Bereich von 0,985 bis 0,993 liegt,
wobei das Lithium-Metalloxid durch die folgende chemische Formel 1 dargestellt ist:
[Chemische Formel 1] LixNiaCobMncM1dM2eO2
wobei in der chemischen Formel 1 M1 und M2 jeweils mindestens eines von Zr, Ti, Mg, Al, Ni, Mn, Zn, Fe, Cr, Mo und W sind,
x 0,90 ≤ x ≤ 1,07 ist, a 0,80 ≤ a < 1 ist, b 0 < b ≤ 0,3 ist, c 0 < c ≤ 0,3 ist, d 0 < d < 0,01 ist, e 0 < e < 0,01 ist und a + b + c + d + e = 1.

8. Verfahren nach Anspruch 7, wobei: der Schritt des Bildens der Deckschicht ein Waschen des Lithium-Metalloxids mit Wasser umfasst; der Schritt des Waschens des Lithium-Metalloxids mit Wasser unter Verwendung einer Waschlösung durchgeführt wird, die Wasser und Additive enthält, um die Deckschicht zu bilden.

9. Verfahren nach Anspruch 8, wobei:
das Additiv mindestens eines von Ammoniumsulfat, Ammoniumcobaltsulfathexahydrat, Ammoniumnickelsulfat, Ammoniummangansulfat und Aluminiumammoniumsulfat ist.

10. Verfahren nach Anspruch 8, wobei:
ein Gehalt des Additivs im Bereich von 1 Gew.-% bis 7 Gew.-%, basierend auf der Waschlösung, liegt.

11. Verfahren nach Anspruch 8, ferner umfassend, nach dem Waschschritt, einen Schritt der Wärmebehandlung nach dem Trocknen des gewaschenen Lithium-Metalloxids, wobei der Schritt der Wärmebehandlung in dem Temperaturbereich von 400 °C bis 600 °C für 3 bis 10 Stunden durchgeführt wird.

12. Lithium-Sekundärbatterie, umfassend: eine positive Elektrode, die das Aktivmaterial für positive Elektroden nach einem der Ansprüche 1 bis 6 umfasst; eine negative Elektrode, die ein negatives Aktivmaterial umfasst; und einen Elektrolyten, der zwischen der positiven und der negativen Elektrode positioniert ist.

## Revendications

1. Matériau actif d'électrode positive comprenant : un oxyde métallique de lithium ; et une couche de revêtement positionnée sur une surface de l'oxyde métallique de lithium ; dans lequel la couche de revêtement inclut un premier composé dont la transmittance moyenne d'un pic, qui est observée dans la plage de 1 580 cm⁻¹ à 1 600 cm⁻¹ par mesure FT-IR, se situe dans la plage de 0,990 à 0,998,
dans lequel la couche de revêtement inclut en outre un second composé dont la transmittance moyenne d'un pic, qui est observée dans la plage de 1070 cm⁻¹ à 1 120 cm⁻¹ par mesure FT-IR, se situe dans la plage de 0,985 à 0,993,
dans lequel l'oxyde métallique de lithium est représenté par la formule chimique 1 ci-dessous :
[Formule chimique 1] LixNiaCobMncM1dM2eO2
Dans la formule chimique 1, M1 et M2 sont au moins l'un de Zr, Ti, Mg, Al, Ni, Mn, Zn, Fe, Cr, Mo et W, respectivement,
x est 0,90 ≤ x ≤ 1,07, a est 0,80 ≤ a < 1, b est 0 < b ≤ 0,3, c est 0 < c ≤ 0,3, d est 0 < d < 0,01, e est 0 < e < 0,01, et a + b + c + d + e = 1.

2. Matériau actif d'électrode positive selon la revendication 1, dans lequel : lorsque A est une valeur obtenue en divisant la moyenne d'absorbance du premier composé par une moyenne d'absorbance du second composé, A satisfait l'équation 1 ci-dessous. 0,72 > A = (une moyenne d'absorbance du premier composé)/(une moyenne d'absorbance du second composé) > 0,41 (Dans l'équation 1, l'absorbance du premier composé est « 1 - la valeur de transmittance du premier composé », et l'absorbance du second composé est « 1 - la valeur de transmittance du second composé ».)

3. Matériau actif d'électrode positive selon la revendication 1, dans lequel :
le premier composé contient une liaison CN.

4. Matériau actif d'électrode positive selon la revendication 1, dans lequel :
le second composé contient des liaisons SOx.

5. Matériau actif d'électrode positive selon la revendication 1, dans lequel :
dans la couche de revêtement, un pic a été observé dans au moins l'une des plages de 398 eV à 404 eV, de 166 eV à 173 eV et de 158 eV à 166 eV, dans le spectre mesuré par spectroscopie de photoé-lectrons à rayons X (XPS).

6. Matériau actif d'électrode positive selon la revendication 1, dans lequel :
une teneur en nickel dans l'oxyde métallique de lithium est de 80 % en mole ou plus.

7. Procédé de fabrication d'un matériau actif d'électrode positive, comprenant : la préparation d'un oxyde métallique de lithium ; et la formation d'une couche de revêtement sur une surface de l'oxyde métallique de lithium ; dans lequel la couche de revêtement inclut un premier composé dont la transmittance moyenne d'un pic, qui est observée dans la plage de 1580 cm¹ à 1600 cm⁻¹ par mesure FT-IR, se situe dans la plage de 0,990 à 0,998, dans lequel la couche de revêtement inclut en outre un second composé dont la transmittance moyenne d'un pic, qui est observée dans la plage de 1070 cm⁻¹ à 1120 cm⁻¹ par mesure FT-IR, se situe dans la plage de 0,985 à 0,993,
dans lequel l'oxyde métallique de lithium est représenté par la formule chimique 1 ci-dessous :
[Formule chimique 1] LixNiaCobMncM1dM2eO2
Dans la formule chimique 1, M1 et M2 sont au moins l'un de Zr, Ti, Mg, Al, Ni, Mn, Zn, Fe, Cr, Mo et W, respectivement,
x est 0,90 ≤ x ≤ 1,07, a est 0,80 ≤ a < 1, b est 0 < b ≤ 0,3, c est 0 < c ≤ 0,3, d est 0 < d < 0,01, e est 0 < e < 0,01, et a + b + c + d + e = 1.

8. Procédé selon la revendication 7, dans lequel : l'étape de formation de la couche de revêtement comprend le lavage de l'oxyde métallique de lithium avec de l'eau ; l'étape de lavage de l'oxyde métallique de lithium avec de l'eau est effectuée à l'aide d'une solution de lavage contenant de l'eau et des additifs pour former la couche de revêtement.

9. Procédé selon la revendication 8, dans lequel :
l'additif est au moins l'un parmi le sulfate d'ammonium, l'hexahydrate de sulfate d'ammonium et de cobalt, le sulfate d'ammonium et de nickel, le sulfate d'ammonium et de manganèse et le sulfate d'aluminium et d'ammonium.

10. Procédé selon la revendication 8, dans lequel :
une teneur en additif se situe dans la plage de 1 % en poids à 7 % en poids sur la base de la solution de lavage.

11. Procédé selon la revendication 8, dans lequel : après l'étape de lavage, comprenant en outre une étape de traitement thermique après séchage de l'oxyde métallique de lithium lavé, l'étape de traitement thermique est mise en œuvre dans la plage de températures de 400°C à 600°C pendant 3 à 10 heures.

12. Batterie secondaire au lithium comprenant : une électrode positive comprenant le matériau actif d'électrode positive selon l'une des quelconques revendication 1 à la revendication 6 ; une électrode négative comprenant un matériau actif négatif ; et un électrolyte positionné entre les électrodes positive et négative.
